# EUROPÄISCHE PATENTSCHRIFT

(11) **EP 1 925 477 B1**
(45) Veröffentlichungstag und Bekanntmachung des Hinweises auf die Patenterteilung: **12.08.2015**
(21) Anmeldenummer: 07021658.5
(22) Anmeldetag: 07.11.2007
(51) Int. Cl.: F23L 5/00, F23C 7/00, B60H 1/22

(54) **Fahrzeugheizgerät**
Vehicle heating device
Appareil de chauffage pour véhicule

(30) Priorität: 22.11.2006 DE 102006055139
(43) Veröffentlichungstag der Anmeldung: 28.05.2008
(73) Patentinhaber: Eberspächer Climate Control Systems GmbH & Co. KG, 73730 Esslingen (DE)
(72) Erfinder: Schmidt, Oliver, 73207 Plochingen (DE)
(74) Vertreter: RLTG

(56) Entgegenhaltungen:
- WO-A1-2007/104271
- DE-A1- 1 703 329
- DE-A1- 3 446 979
- DE-A1- 19 638 847
- DE-C1- 19 906 515
- DE-U1- 29 722 802

## Beschreibung

Die vorliegende Erfindung betrifft ein Fahrzeugheizgerät gemäß dem Oberbegriff des Anspruchs 1, wie es in Kraftfahrzeugen beispielsweise als Zuheizer oder Startheizung eingesetzt wird, um bei vergleichsweise niedrigen Umgebungstemperaturen durch Verbrennung eines Gemisches aus Brennstoff und Luft Wärme bereitzustellen. Dabei kommt auf Grund der steigenden Brennstoffpreise alternativen Brennstoffen, wie z.B. PME (Pflanzenmethylester), beispielsweise Rapsmethylester, immer größere Bedeutung zu. Da diese vermehrt auch als Kraftstoff für Brennkraftmaschinen in Fahrzeugen eingesetzt werden und im Allgemeinen brennstoffbetriebene Fahrzeugheizgeräte aus dem gleichen Tank und mithin mit dem gleichen Brennstoff gespeist werden, wie die Brennkraftmaschine in einem Fahrzeug, besteht auch für derartige Fahrzeugheizgeräte die Anforderung der Anpassung an derartige alternative Brennstoffe.

Ein Problem bei Fahrzeugheizgeräten, die an sich für Brennstoffe wie Diesel oder Benzin ausgelegt sind, ist, dass die im Bereich derjenigen Baugruppen, in welchen die Verbrennung stattfindet, vorhandene Temperatur so hoch ist, dass vor allem bei Einsatz von PME als Brennstoff in den Brennstoff führenden Baugruppen unerwünschte Reaktionen dieses Brennstoffs mit dem Luftsauerstoff auftreten können. Dies kann die Betriebslebensdauer derartiger Baugruppen beeinträchtigen und zu einem ungewünschten Verbrennungsverhalten führen.

Die WO 2007/104271 A1 offenbart ein Fahrzeugheizgerät nach Artikel 54(3) EPÜ, bei welchem eine Brennluftzuführeinrichtung zwei auf einer gemeinsamen Welle angeordnete und somit durch diese zur Drehung angetriebene Ventilatoren umfasst. Der durch diese Ventilatoren geförderte Luftstrom teilt sich auf in einen in eine Brennkammer eingeleiteten und somit zur Verbrennung nutzbaren Luftstrom sowie einen ein Brennkammergehäuse außen umströmenden und dann nach außen zur Umgebung hin abgegebenen Luftstrom.

Die DE 196 38 847 A1, DE 199 06 515 C1 und DE 17 03 329 A1 offenbaren jeweils ein Seitenkanalgebläse mit einem ringartig um eine Drehachse sich erstreckenden Förderkanal. In einem Eintrittsbereich tritt zu fördernde Luft in den Förderkanal ein und in einem durch einen Unterbrecherbereich vom Eintrittsbereich getrennten Austrittsbereich tritt die entlang des Förderkanals geförderte Luft aus dem Förderkanal aus. Ein mit in ringartiger Konfiguration aufeinander folgend angeordneten Schaufeln ausgebildetes Fördrerad liegt dem Förderkanal axial gegenüber und führt im Rotationsbetrieb zu einem Druckaufbau zwischen dem Austrittsbereich und dem Austrittsbereich.

Es ist die Aufgabe der vorliegenden Erfindung, ein Fahrzeugheizgerät bereitzustellen, bei welchem die Temperatur derjenigen Baugruppen, in deren Bereich die Verbrennung stattfindet, gesenkt werden kann.

Erfindungsgemäß wird diese Aufgabe gelöst durch ein Fahrzeugheizgerät, umfassend eine Brennkammerbaugruppe mit einem Brennkammergehäuse und einem als Seitenkanalgebläse ausgebildeten Gebläse zum Fördern von Luft in einen das Brennkammergehäuse wenigstens bereichsweise umgebenden Druckraum, über welchen Luft in eine in dem Brennkammergehäuse gebildete Brennkammer eintritt, wobei eine Abgabeöffnungsanordnung vorgesehen ist zur Abgabe eines Teils der in den Druckraum geförderten Luft nach außen unter Umgehung der Brennkammer.

Mit dem erfindungsgemäßen Fahrzeugheizgerät wird ein Kühleffekt dadurch erzeugt, dass ein Teil der in den Druckraum eingeleiteten Luft nicht auch als Verbrennungsluft in das Brennkammergehäuse eingespeist wird. Diese Luft wird, nachdem sie in den Druckraum eingespeist worden ist und das Brennkammergehäuse an seiner Außenseite umströmt und dort Wärme aufgenommen hat, nach außen abgegeben und so die aufgenommene Wärme abtransportiert. Auf diese Art und Weise kann das Temperaturniveau im Bereich des Brennkammergehäuses und im Bereich der das Brennkammergehäuse umgebenden Komponenten gesenkt werden und somit die Einsatzfähigkeit eines derartigen Fahrzeugheizgerätes auch für alternative Brennstoffe, wie z.B. PME, gewährleistet werden.

Bei einer besonders einfach zu realisierenden Ausgestaltungsform kann vorgesehen sein, dass eine das Brennkammergehäuse außen umgebende Außenwand den Druckraum - bezogen auf eine Brennkammerlängsachse - nach radial außen begrenzt und dass die Abgabeöffnungsanordnung wenigstens eine Durchtrittsöffnung in der Außenwand umfasst. Dies bedeutet, dass der nicht in die Brennkammer eingespeiste Anteil der in den Druckraum geförderten Luft, ohne durch weitere Systembereiche des Fahrzeugheizgeräts hindurchgespeist zu werden, direkt nach außen, also in den das Fahrzeugheizgerät umgebenden Raum, abgegeben wird.

Alternativ oder zusätzlich ist es möglich, dass das Brennkammergehäuse einen - bezogen auf eine Brennkammerlängsachse - nach radial außen greifenden Befestigungsbereich umfasst, mit welchem das Brennkammergehäuse an einem Wärmetauschergehäuse festgelegt ist und welcher den Druckraum von einem in dem Wärmetauschergehäuse gebildeten Abgasströmungsraum trennt, und dass die Abgabeöffnungsanordnung wenigstens eine Durchtrittsöffnung im Bereich des Befestigungsbereichs oder/und des Wärmetauschergehäuses umfasst. Durch die Abgabe des nicht in die Brennkammer eingeleiteten Teils der in den Druckraum geförderten Luft in den Abgasströmungsraum wird sichergestellt, dass dieser Luftanteil, beispielsweise ohne sich mit anderen Luftströmen zu vermischen, über das Abgasführungssystem des Fahrzeugheizgerätes nach außen, beispielsweise auch nach außerhalb eines Fahrzeugs, abgegeben wird. Die Gefahr, dass aus dem Abgasströmungsraum dort strömende Abgase durch eine derartige Durchtrittsöffnung dann in den Druckraum strömen besteht grundsätzlich nicht, da der Druck im Druckraum höher ist, als der Druck im Abgasströmungsraum.

Dies kann beispielsweise dadurch realisiert werden, dass die wenigstens eine Durchtrittsöffnung in dem Befestigungsbereich ausgebildet ist, beispielsweise als Loch. Selbstverständlich ist es auch möglich, den Befestigungsbereich mit mehreren nach radial außen greifenden Armabschnitten bzw. Umfangssektoren auszubilden, so dass zwischen derartigen Umgangssektoren dann die Abgabe eines Teils der in den Druckraum eingeleiteten Luft ermöglicht.

Bei einer weiteren Ausgestaltungsform kann vorgesehen sein, dass der Befestigungsbereich im Wesentlichen ringartig ausgebildet ist und unter Zwischenlagerung eines im Wesentlichen ringartigen Zwischenlager elements an einer Stirnwand des Wärmetauschergehäuses anliegt und dass in dem Zwischenlagerelement wenigstens eine Umfangsunterbrechung zum Bereitstellen der Durchtrittsöffnung vorgesehen ist. Ein derartiges Zwischenlagerelement kann dabei sowohl die Funktionalität einer Dichtung als auch die Funktionalität einer thermischen Isolation zwischen dem Brennkammergehäuse bzw. dessen Befestigungsbereich und dem Wärmetauschergehäuse realisieren.

Weiter ist es möglich, dass der Befestigungsbereich unter Zwischenlagerung wenigstens eines Distanzelements an dem Wärmetauschergehäuse festgelegt ist. Ein derartiges Distanzelement kann beispielsweise einen Befestigungsbolzen umgebend angeordnet sein, mit welchem der Befestigungsbereich und somit das Brennkammergehäuse am Wärmetauschergehäuse festgelegt ist.

Bei einer weiteren Ausgestaltungsvariante kann vorgesehen sein, dass an einer Stirnfläche des Wärmetauschergehäuses oder/und dem Befestigungsbereich eine den Luftdurchtritt zulassende Oberflächenstrukturierung ausgebildet ist. Eine derartige Oberflächenstrukturierung kann beispielsweise rillen- oder nutartige Einsenkungen umfassen, die in demjenigen Oberflächenbereich oder denjenigen Oberflächenbereichen des Befestigungsbereichs und des Wärmetauschergehäuses vorgesehen sind, in welchen diese unmittelbar aneinander anliegen, so dass hier eine die Durchströmung zulassende und mithin eine Durchtrittsöffnung bereitstellende Überbrückung geschaffen ist.

Bei einer weiteren Ausgestaltungsform kann vorgesehen sein, dass an einer Stirnwand des Wärmetauschergehäuses oder/und an dem Befestigungsbereich in wenigstens einem Umfangsbereich eine Vertiefung ausgebildet ist.

Die vorliegende Erfindung wird nachfolgend mit Bezug auf die beiliegenden Zeichnungen detailliert beschrieben. Es zeigt:
- Fig. 1: einen teilweise im Schnitt dargestellten Längenabschnitt eines Fahrzeugheizgerätes;
- Fig. 2: eine der Fig. 1 entsprechende Ansicht einer alternativen Ausgestaltungsform;
- Fig. 3: eine Axialansicht des Fahrzeugheizgerätes der Fig. 3 bei entferntem Gebläse;
- Fig. 4: ein bei einem Fahrzeugheizgerät zwischen einem Befestigungsbereich eines Brennkammergehäuses und einem Wärmetauschergehäuse anzuordnendes Zwischenlagerelement;
- Fig. 5: eine schematische Ansichfeines mit einem Wärmetauschergehäuse unter Bildung einer Durchtrittsöffnung verbundenen Brennkammergehäuses;
- Fig. 6: eine der Fig. 5 entsprechende Ansicht einer alternativen Ausgestaltungsform;
- Fig. 7: in ihrer Darstellung a) eine weitere der Fig. 5 entsprechende Ansicht einer alternativen Ausgestaltungsform und in ihrer Darstellung b) eine Axialansicht eines Befestigungsbereichs des in der Darstellung a) erkennbaren Brennkammergehäuses;
- Fig. 8: in ihrer Darstellung a) eine Abwandlung der in Fig. 7a) dargestellten Ausgestaltungsform und ihrer Darstellung b) eine Axialansicht einer Stirnfläche eines in der Darstellung der Fig. 8a) erkennbaren Wärmetauschergehäuses.

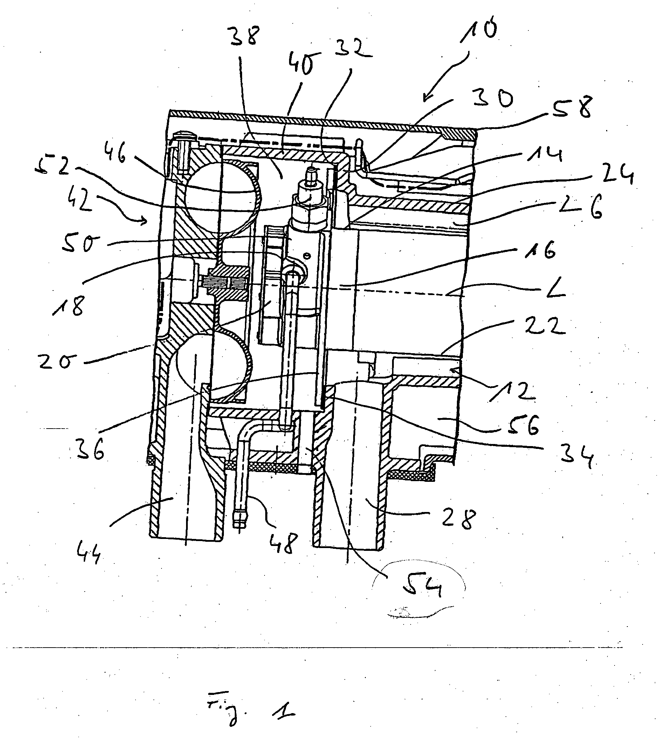

Das in Fig. 1 abschnittsweise dargestellte Fahrzeugheizgerät 10 umfasst als zentrale Baugruppe eine Brennkammerbaugruppe 12 mit einem Brennkammergehäuse 14. Dieses Brennkammergehäuse 14 wiederum ist aufgebaut mit einer Umfangswandung 16 und einer Bodenwandung 18, in welcher ein Lufteintrittsbereich mit einer Luftleiteinrichtung 20 zum Einleiten von zur Verbrennung erforderlicher Luft in eine im Brennkammergehäuse 14 gebildete Brennkammer vorgesehen ist. An das Brennkammergehäuse 14 bzw. die Umfangswandung 16 desselben schließt ein Flammrohr 22 an, entlang welchem die bei der Verbrennung in der Brennkammer entstehenden Verbrennungsabgase strömen. An einem in der Fig. 1 nicht dargestellten offenen Ende treten die Verbrenungsabgase aus dem Flammrohr aus und strömen zurük entlang der Außenseite des Flammrohrs 22 in einem zwischen dem Flammrohr 22 und einem Brennkammergehäuse 24 gebildeten Abgasströmungsraum 26. Ein Abgabestutzen 28 führt die Verbrennungsabgase aus dem Abgasströmungsraum 26 heraus und zu einem Abgasführungssystem bzw. zur Umgebung.

In seinem im Bereich des Brennkammergehäuses 14 liegenden Bereich weist das Wärmetauschergehäuse 24 eine stufenartige, radiale Erweiterung 30 mit einer daran gebildeten Stirnfläche 32 auf. An dieser Stirnfläche liegt unter Zwischenlagerung eines Zwischenlagerelements 34 ein nach radial außen greifender, ringartiger bzw. flanschartiger Befestigungsbereich 36 des Brennkammergehäuses 14 an. Dieser erstreckt sich von der Umfangswandung 16 und ist beispielsweise integral mit dieser ausgebildet. Durch eime Mehrzahl nicht dargestellter Befestigungsbolzen, beispielsweise Schraubbolzen, ist der Befestigungsbereich 36 an der stufenartigen Erweiterung 30 des Wärmetauschergehäuses 24 befestigt. Auf diese Art und Weise ist durch diesen Befestigungsbereich 36 der Abgasströmungsraum 26 von einem das Brennkammergehäuse bzw. die Umfangswandung 16 und den Bodenbereich 18 umgebenden Druckraum 38 getrennt. Nach radial außen, radial bezogen auf eine Brennkammerlängsachse L, ist der Druckraum 38 begrenzt durch eine Außenwand 40, die in dem in Fig. 1 dargestellten Beispiel integral ausgebildet ist mit dem Wärmetauschergehäuse 24 und an den radial äußeren Bereich der stufenartigen Erweiterung 30 anschließt.

An dem von der stufenartigen Erweiterung 30 entfernt liegenden Ende der Außenwand 40 ist mit dem Wärmetauschergehäuse 24 ein Gebläse 42, dieses ausgebildet als Seitenkanalgebläse, verbunden. Dieses nimmt die in den Druckraum 40 einzuleitende Luft im Bereich einer Ansaugöffnung 44 auf und gibt es unter der Föderwirkung eines Förderrads 46 in den Druckraum 38 ab. Durch das Gebläse 42 ist also der Druckraum 38 an seinem von dem Abgasströmungsraum 26 entfernten Ende axial abgeschlossen.

Um im Brennkammergehäuse 14 bzw. der darin gebildeten Brennkammer ein verbrennungsfähiges Gemisch mit der in den Druckraum 38 eingeleiteten und über die Luftleiteinrichtung 20 in die Brennkammer geführten Luft zu erzeugen, führt eine Zuführleitung 48 durch den Druckraum 38 und die Umfangswandung 16 des Brennkammergehäuses 14 hindurch und speist den zunächst flüssigen Brennstoff, also beispielsweise Pflanzenmethlyester, in das Brennkammergehäuse 14 ein. Dort kann ein poröses Verdampfermedium vorgesehen sein, das den flüssigen Brennstoff aufnimmt, durch Kapillarförderwirkung verteilt und zur Brennkammer abdampft, um das Gemisch aus Luft Brennstoffdampf zu erzeugen.

Weiterhin ist an dem Brennkammergehäuse 14 ein an der Umfangswandung 16 nach außen sich weg erstreckender Zündorganaufnahmeansatz 50 vorgesehen. Dieser näherungsweise tangential von der Umfangswanduna 16 sich weg erstreckende Zündorganaufnahmeansatz trägt ein in der Fig. 1 nur mit seinem außerhalb dieses Ansatzes sich erstreckenden, rückwärtigen Teil dargestelltes Zündorgan 52, beispielsweise einen Glühzündstift. Durch Erregung desselben werden im Zündorganaufnahmeansatz lokal derart hohe Temperaturen erzeugt, dass das dort vorhandene Gemisch aus Luft und Brennstoffdampf zündet und somit die Verbrennung gestartet wird.

Um dafür zu sorgen, dass die Temperatur der im Bereich der ablaufenden Verbrennung liegenden Baugruppen, insbesondere des Brennkammergehäuses 14, der Zuführleitung 48 und der Außenwand 40 nicht zu hoch wird, da sonst vor allem bei Einsatz alternativer Brennsttoffe, wie z.B. PME, ungünstige Reaktionen auftreten können, ist bei der erfindungsgemäßen Ausgestaltung des Fahrzeugheizgerätes 10 dafür gesorgt, dass ein Teil der durch das Seitenkanalgebläse 42 in den Druckraum 38 eingeleiteten Luft nicht in die Brennkammer im Brennkammergehäuse 14 eintritt. Vielmehr ist dafür gesorgt, dass dieser Anteil der in den Druckraum 38 eingeleiteten Luft, nachdem er das Brennkammergehäuse 14 und auch die im Druckraum 38 sich erstreckende Zuführleitung 48 umströmt hat und dort Wärme aufgenommen hat, durch eine Abgabeöffnungsanordnung 53 nach außen abgegeben wird, also nicht in die in dem Brennkammergehäuse 14 gebildete Brennkammer eingeleitet wird. Dieser Anteil der in den Druckaum 38 geleiteten Luft dient also ausschließlich als Kühlluft und nimmt die von den angesprochenen Komponenten aufgenommene Wärme aus dem Bereich des Fahrzeugheizgerätes 10 weg transportiert wird.

Bei der in Fig. 1 dargestellten Ausgestaltungsform eines Fahrzeugheizgerätes 10 ist hierzu im Wärmetauschergehäuse 24 bzw. der damit integral ausgebildeten Außenwand als Abgabeöffnungsanordnung 53 eine Durchtrittsöffnung 54 gebildet, welche eine direkte Verbindung zwischen dem Druckraum 38 und der Umgebung des Fahrzeugheizgerätes 10 herstellt. Auf Grund des im Druckraum 38 im Betrieb des Gebläses 42 vorhandenen Überdrucks wird also permanent ein Teil der in den Druckraum 38 eingeleiteten Luft durch die Durchtrittsöffnung 54 entweichen und dabei Wärme abführen.

Es ist selbstverständlich, dass mehrere derartige Durchtrittsöffnungen 54 durch die Außenwand 40 hindurch geführt sein können, um einen größeren Volumenstrom einstellen zu können. Es ist weiter selbstverständlich, dass entsprechend den durch die Durchtrittsöffnung 54 oder ggf. mehrere Durchtrittsöffnungen geschaffenen Luftaustritt auch die Fördermenge der vom Gebläse 42 geförderten Luft angepasst werden muss, um noch ausreichend Luft für die im Brennkammergehäuse 14 ablaufende Verbrennung bereitzustellen.

Man erkennt in der Fig. 1 weiter, dass die Durchtrittsöffnung 54 so ausgebildet ist, dass sie die direkte Verbindung zwischen dem Druckraum 38 und der Umgebung des Fahrzeugheizgerätes 10 herstellt, so dass die durch die Durchtrittsöffnung 54 strömende Luft auch nicht in einen Raumbereich 56 gelangen kann, welcher zwischen der Außenseite des Wärmetauschergehäuses 14 und einem äußeren Heizgerätegehäuse 58 gebildet ist und zur Durchströmung für die in einen Fahrzeuginnenraum einzuleitende Luft, welche Wärme von der Außenseite des Wärmetauschergehäuses 24 aufnimmt, vorgesehen ist.

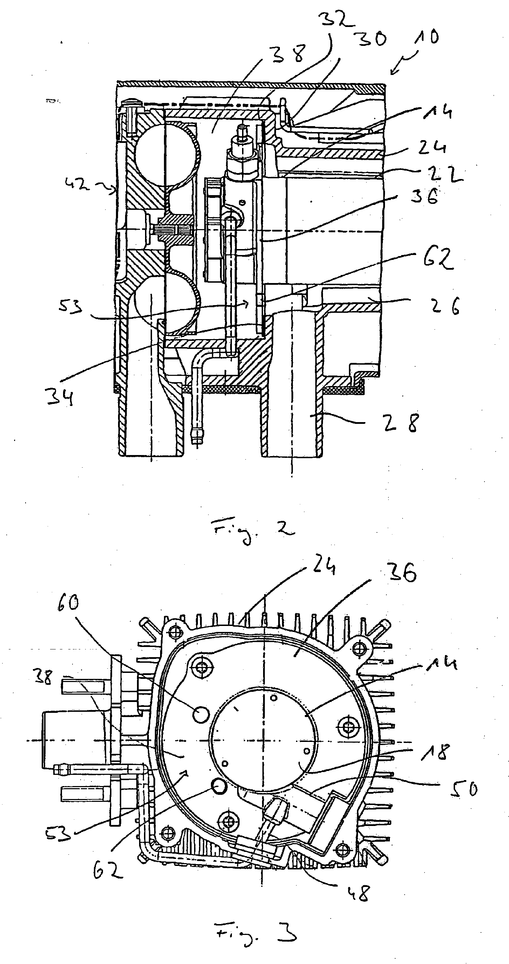

Eine abgewandelte Ausgestaltungsform ist in den Fig. 2 und 3 gezeigt. Man erkennt, dass im ringartig ausgestalteten Befestigungsbereich 36 des Brennkammergehäuses 14 hier zwei lochartige Durchtrittsöffnungen 60, 62 gebildet sind. Diese stellen eine unmittelbare Verbindung zwischen dem Druckraum 38 und dem in der Fig. 3 hinter dem Befestigungsbereich 36 liegenden Abgasströmungsraum 26 her. D.h., die im Druckraum 38 unter Überdruck stehende Luft gelangt, nachdem sie das Brennkammergehäuse 14 umströmt hat, durch diese lochartigen Durchtrittsöffnungen 60, 62 in den Abgasströmungsraum 26 und kann somit zusammen mit dem dort strömenden Abgas über den Stutzen 28 nach außen abgegeben werden. Die Gefahr, dass Abgase aus dem Abgasströmungsraum 26 in den Druckraum 38 gelangen, besteht nicht, da auf Grund der beim Durchströmen des Brennkammergehäuses 14 des Flammrohrs 22 und des Abgasströmungsraums 26 auftretenden Strömungswiderstände Druckverluste vorhanden sind, die dazu führen, dass der Druck im Druckraum 38 immer höher sein wird, als der Druck im Abgasströmungsraum 26.

Bei dieser in den Fig. 2 und 3 gezeigten Ausgestaltungsform ist also für den Durchtritt bzw. die Abgabe von Kühlluft in demjenigen Bereich gesorgt, in welchem das Brennkammergehäuse 14 mit dem Wärmetauschergehäuse 24 in Verbindung steht, hier dem Befestigungsbereich 36.

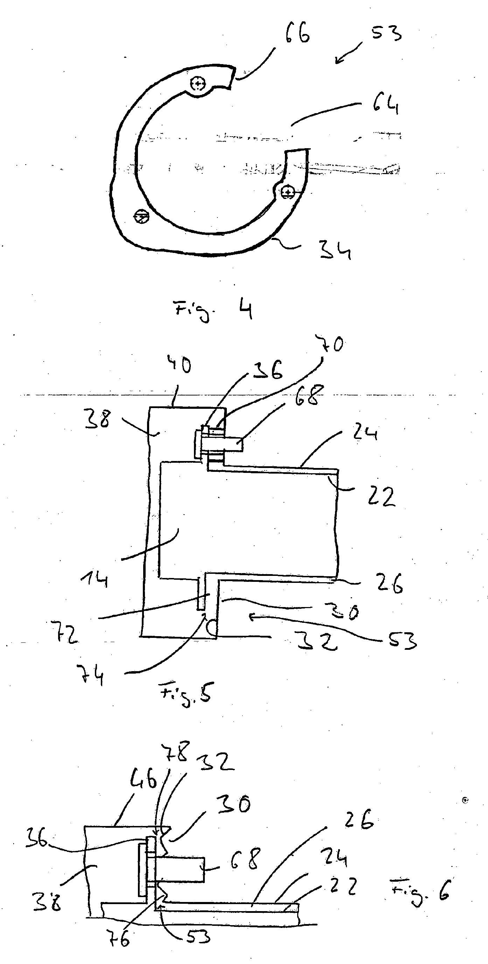

Abgewandelte Ausgestaltungsformen, bei welchen ebenfalls die Abgabe derartiger Kühlluft aus dem Bereich der Anbindung des Befestigungsbereichs 36 an das Wärmetauschergehäuse 24 erfolgt, werden nachfolgend mit Bezug auf die Fig. 4 bis 8 beschrieben.

Man erkennt zunächst in der Fig. 4 in Draufsicht das Zwischenlagerelement 34, welches zwischen dem Befestigungsbereich 36 und der stufenartigen Erweiterung 30 bzw. der Stirnfläche 32 des Wärmetauschergehäuses 24 angeordnet ist. Dieses Zwischenlagerelement 34 war bei den vorangehend beschriebenen Ausgestaltungsformen im Wesentlichen als geschlossener Ring ausgebildet. Bei der in Fig. 4 gezeigten Ausgestaltungsform weist das Zwischenlagerelement 34 eine Unterbrechung 64 auf. Im Bereich dieser Unterbrechung 64 ist also bei Zwischenpositionierung des Zwischenlager elements 34 zwischen dem Befestigungsbereich 36 und der Stirnfläche 32 eine Durchtrittsöffnung 66 gebildet, welche wiederum eine Strömungsverbindung vom Druckraum 38 zum Abgasströmungsraum 26 herstellt.

Bei der in Fig. 5 gezeigten Ausgestaltungsform erkennt man einen der Befestigungsbolzen 68, mit welchen das Brennkammergehäuse 14 im Bereich des Befestigungsbereichs 36 an die stufenartige Erweiterung 30 des Wärmetauschergehäuses 24 angebunden ist. Zwischen dem Befestigungsbereich 36 und der Stirnfläche 32 ist den bzw. jeden derartigen Befestigungsbolzen 68 umgebend ein Distanzelement 70 angeordnet, das nach Art einer Beilagscheibe dazu führt, dass ein spaltartiger Zwischenraum 72 zwischen dem Befestigungsbereich 36 und der Stirnfläche 32 und mithin eine näherungsweise ringspaltartige Durchtrittsöffnung 74 generiert wird, die lediglich dort in Umfangsrichtung unterbrochen ist, wo die Distanzelemente 70 jeweils einen Schraubbolzen 68 umgeben.

In Fig. 6 ist eine Ausgestaltungsvariante gezeigt, bei welcher an der Stirnfläche 32 der stufenartigen Erweiterung 30 eine Oberflächenstrukturierung 76 gebildet ist. Diese Oberflächenstrukturierung 76, an welcher der Befestigungsbereich 36 mit im Wesentlichen unstrukturierter, planarer Oberfläche anliegt, sorgt dafür, dass eine Vielzahl kanalartiger Durchtrittsöffnungen 78 generiert wird, über welche der Druckraum 38 in Verbindung mit dem Abgasströmungsraum 26 ist und mithin unter Überdruck stehende Luft strömen kann: Die Oberflächenstrukturierung 76 kann beispielsweise mit sich näherungsweise radial erstreckenden Rippen oder rippenartigen Erhebungen ausgebildet sein, kann jedoch auch mit spitzenartigen Erhebungen ausgebildet sein. Selbstverständlich ist es auch möglich, die an der Stirnfläche 32 anliegende Oberfläche des Befestigungsbereichs 36 zu strukturieren, während die Stirnfläche 32 dann im Wesentlichen glatt ausgebildet ist.

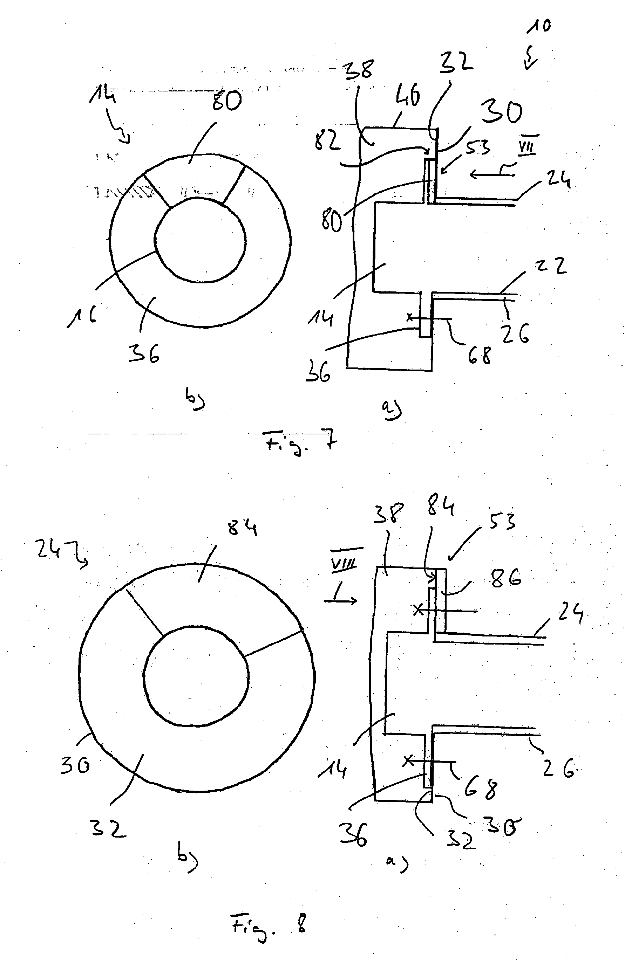

Eine weitere alternative Variante ist in Fig. 7 gezeigt. Dabei erkennt man bei der in Fig. 7b) gezeigten Axialansicht des Befestigungsbereichs 36, welcher hier gesehen wird in Blickrichtung VII in der Fig. 7a), dass in diesem Befestigungsbereich 36 in einem Umgfangssektor eine Einsenkung 80 gebildet ist. Im Bereich dieser Einsenkungn 80 weist also der Befestigungsbereich 36 eine geringere Materialstärke auf, so dass zwischen diesem und der Stirnfläche 32 der stufenartigen Erweiterung 30 des Wärmetauschergehäuses 24 wiederum eine den Druckraum 38 mit dem Abgasströmungsraum verbindende Durchtrittsöffnung 82 gebildet ist. Es ist selbstverständlich, dass mehrere derartige Sektoren mit Vertiefungen 80 über den Umfang verteilt vorgesehen sein können. Die Anbindung des Befestigungsbereichs 36 an das Wärmetauschergehäuse 24 vermittelt der in Fig. 7a) symbolisch dargestellten Befestigungsbolzen 68 erfolgt dann vorzugsweise in denjenigen Bereichen, in welchen der Befestigungsbereich 36 unmittelbar an der Stimfläche 32 anliegt.

Bei der in Fig. 8 gezeigten Ausgestaltungsvariante ist eine derartige in einem Umfangssektor gebildete Einsenkung 84 in der in der Fig. 8b) in Richtung VIII gesehenen Stirnfläche 32 der stufenartigen Erweiterung 30 gebildet. Auch hier ist also in dem Bereich dieser Einsenkung 84 dafür gesorgt, dass kein unmittelbarer Kontakt zwischen dem Befestigungbereich 36 und dem Wärmetauschergehäuse 24 besteht, so dass auch hier eine Durchtrittsöffnung 86 eine Verbindung zwischen dem Druckraum 38 und dem Abgasströmungsraum 26 herstellt. Es ist selbstverständlich, dass auch hier mehrere derartige Einsenkungen 84 in Umfangsrichtung verteilt vorgesehen sein können. Selbstverständlich ist es auch möglich, die Einsenkungen 84 der Fig. 8 mit den Einsenkungen 80 der Fig. 7 entweder in gleichen oder in verschiedenen Umfangsbereichen zu kombinieren.

Vorangehend wurden verschiedene Ausgestaltungsformen beschrieben, mit welchen die Möglichkeit geschaffen wird, in den Druckraum 38 eingespeiste und Wärme vom Brennkammergehäuse 14 bzw. auch der Zuführleitung 48 aufnehmende Luft unter Umgehung der Brennkammer nach außen, also beispielsweise unmittelbar um die Umgebung oder in den Abgasströmungsweg, abzugeben. Es ist selbstverständlich, dass diese vorangehend beschriebenen Ausgestaltungsvarianten problemlos miteinander kombiniert werden können.

## Patentansprüche

1. Fahrzeugheizgerät, umfassend eine Brennkammerbaugruppe (12) mit einem Brennkammergehäuse (14) und einem Gebläse (42) zum Fördern von Luft in einen das Brennkammergehäuse (14) wenigstens bereichsweise umgebenden Druckraum (38), über welchen Luft in eine in dem Brennkammergehäuse (14) gebildete Brennkammer eintritt, wobei eine Abgabeöffnungsanordnung (53) vorgesehen ist zur Abgabe eines Teils der in den Druckraum (38) geförderten Luft nach außen unter Umgehung der Brennkammer,
wobei das Gebläse (42) ein Seitenkanalgebläse ist.

2. Fahrzeugheizgerät nach Anspruch 1,
**dadurch gekennzeichnet, dass** eine das Brennkammergehäuse (14) außen umgebende Außenwand (40) den Druckraum (38) - bezogen auf eine Brennkammerlängsachse (L) - nach radial außen begrenzt und dass die Abgabeöffnungsanordnung (53) wenigstens eine Durchtrittsöffnung (54) in der Außenwand umfasst.

3. Fahrzeugheizgerät nach Anspruch 1 oder 2,
**dadurch gekennzeichnet, dass** das Brennkammergehäuse (14) einen - bezogen auf eine Brennkammerlängsachse (L) - nach radial außen greifenden Befestigungsbereich (36) umfasst, mit welchem das Brennkammergehäuse (14) an einem Wärmetauschergehäuse (24) festgelegt ist und welcher den Druckraum (38) von einem in dem Wärmetauschergehäuse (24) gebildeten Abgasströmungsraum (26) trennt, und dass die Abgabeöffnungsanordnung (53) wenigstens eine Durchtrittsöffnung (60, 62; 66; 74; 78; 82; 86) im Bereich des Befestigungsbereichs (36) oder/und des Wärmetauschergehäuses (24) umfasst.

4. Fahrzeugheizgerät nach Anspruch 3,
**dadurch gekennzeichnet, dass** die wenigstens eine Durchtrittsöffnung (60, 62; 82) in dem Befestigungsbereich ausgebildet ist.

5. Fahrzeugheizgerät nach Anspruch 4,
**dadurch gekennzeichnet, dass** die wenigstens eine Druchtrittsöffnung (60, 62) lochartig ausgebildet ist.

6. Fahrzeugheizgerät nach einem der Ansprüche 3 bis 5,
**dadurch gekennzeichnet, dass** der Befestigungsbereich (36) im Wesentlichen ringartig ausgebildet ist und unter Zwischenlagerung eines im Wesentlichen ringartigen Zwischenlagerelements (34) an einer Stirnwand (32) des Wärmetauschergehäuses (24) anliegt und dass in dem Zwischenlagerelement (34) wenigstens eine Umfangsunterbrechung (64) zum Bereitstellen der Durchtrittsöffnung (66) vorgesehen ist.

7. Fahrzeugheizgerät nach einem der Ansprüche 3 bis 6,
**dadurch gekennzeichnet, dass** der Befestigungsbereich (36) unter Zwischenlagerung wenigstens eines Distanzelements (70) an dem Wärmetauschergehäuse (24) festgelegt ist.

8. Fahrzeugheizgerät nach Anspruch 7,
**dadurch gekennzeichnet, dass** das wenigstens eine Distanzelement (70) einen Befestigungsbolzen (68) umgebend angeordnet ist.

9. Fahrzeugheizgerät nach einem der Ansprüche 3 bis 8,
**dadurch gekennzeichnet, dass** an einer Stirnfläche (32) des Wärmetauschergehäuses (24) oder/und an dem Befestigungsbereich (36) eine den Luftdurchtritt zulassende Oberflächenstrukturierung (76) ausgebildet ist.

10. Fahrzeugheizgerät nach einem der Ansprüche 3 bis 9,
**dadurch gekennzeichnet, dass** an einer Stirnfläche (32) des Wärmetauschergehäuses (24) oder/und an dem Befestigungsbereich (36) in wenigstens einem Umfangsbereich eine Vertiefung (80; 84)ausgebildet ist.

## Claims

1. Vehicle heating device, comprising a combustion chamber assembly (12) with a combustion chamber housing (14) and a blower (42) for transporting air to a pressure room (38) surrounding at least partly the combustion chamber housing (14), by which air enters a combustion chamber formed in the combustion chamber housing (14), a discharge opening arrangement (53) being provided for delivering part of the air transported to the pressure room (38) to the outside avoiding the combustion chamber,
wherein the blower (42) is a side channel blower.

2. Vehicle heating device according to claim 1,
**characterized by** an external wall (40) which surrounds the outside of the combustion chamber housing (14) limiting the pressure room (38) radially outwards - in relation to a combustion chamber longitudinal axis (L) - and by said discharge opening arrangement (53) comprising at least a passage opening (54) in the external wall.

3. Vehicle heating device according to claim 1 or 2,
**characterized by** the combustion chamber housing (14) comprising an attachment area (36) engaging radially outwards - in relation to a combustion chamber longitudinal axis (L) - by which the combustion chamber housing (14) is attached to a heat exchanger housing (24) and which separates the pressure room (38) from an exhaust gas flow room (26) formed inside the heat exchanger housing (24), and by the discharge opening arrangement (53) comprising at least one passage opening (60, 62; 66; 74; 78; 82; 86) in the region of the attachment area (36) or/and of the heat exchanger housing (24).

4. Vehicle heating device according to claim 3,
**characterized by** the at least one passage opening (60, 62; 82) being formed in the attachment area.

5. Vehicle heating device according to claim 4,
**characterized by** the at least one passage opening (60, 62) being formed as a hole.

6. Vehicle heating device according to one of claims 3 to 5,
**characterized by** the attachment area (36) having substantially an annular shape and abutting on a front wall (32) of the heat exchanger housing (24) using intermediate storage of a substantially annular intermediate storage element (34) and by at least one circumference interruption (64) being provided in the intermediate storage element (34) for providing the passage opening (66).

7. Vehicle heating device according to one of claims 3 to 6,
**characterized by** the attachment area (36) being attached to the heat exchanger housing (24) using intermediate storage of at least one distance element (70).

8. Vehicle heating device according to claim 7,
**characterized by** the at least one distance element (70) being arranged surrounding a fastening bolt (68).

9. Vehicle heating device according to one of claims 3 to 8,
**characterized by** a surface structure (76) allowing an air passage being formed at a front surface (32) of the heat exchanger housing (24) or/and at the attachment area (36).

10. Vehicle heating device according to one of claims 3 to 9,
**characterized by** a depression (80; 84) being formed in at least one circumferential area at a front surface (32) of the heat exchanger housing (24) or/and at the attachment area (36).

## Revendications

1. Dispositif de chauffage pour un véhicule, comprenant un ensemble de chambre de combustion (12) avec un boîtier de chambre de combustion (14) et une soufflerie (42) pour transporter de l'air vers un espace de pression (38) entourant au moins partiellement le boîtier de chambre de combustion (14), par lequel l'air entre dans une chambre de combustion formé dans le boîtier de chambre de combustion (14), un arrangement d'ouverture de rejet (53) étant prévu pour le rejet d'une partie de l'air transporté vers l'espace de pression (38) vers l'extérieur évitant la chambre de combustion, la soufflerie (42) étant une soufflerie a canaux latérales.

2. Dispositif de chauffage pour un véhicule selon la revendication 1, **caractérisé par** une paroi externe (40) entourant l'extérieur de la chambre de combustion (14) limitant l'espace de pression (38) radialement vers l'extérieur - relatif à un axe longitudinal de la chambre de combustion (L) - et par l'arrangement d'ouverture de rejet (53) comprenant au moins une ouverture de passage (54) dans la paroi externe.

3. Dispositif de chauffage pour un véhicule selon la revendication 1 ou 2, **caractérisé par** la chambre de combustion (14) comprenant une zone de fixation (36) engageant radialement l'extérieur - en relation à un axe longitudinal de la chambre de combustion (L) - par laquelle la chambre de combustion (14) est fixée à un boîtier d'échangeur de chaleur (24) et qui sépare l'espace de pression (38) d'un espace de décharge (26) formé dans le boîtier d'échangeur de chaleur (24), et par l'arrangement d'ouverture de rejet (53) comprenant au moins une ouverture de passage (60, 62; 66; 74; 78; 82; 86) dans la région de la zone de fixation (36) ou/et du boîtier d'échangeur de chaleur (24).

4. Dispositif de chauffage pour un véhicule selon la revendication 3, **caractérisé par** ladite au moins une ouverture de passage (60, 62; 82) étant formée dans la zone de fixation.

5. Dispositif de chauffage pour un véhicule selon la revendication 4, **caractérisé par** ladite au moins une ouverture de passage (60, 62) étant formée sous forme d'un trou.

6. Dispositif de chauffage pour un véhicule selon une des revendications 3 à 5, **caractérisé par** la zone de fixation (36) étant formée essentiellement de façon annulaire et reposant contre une paroi frontale (32) du boîtier d'échangeur de chaleur (24) en stockant de façon intermédiaire un élément de stockage intermédiaire (34) essentiellement annulaire, et par au moins une interruption circonférentielle (64) étant prévue dans l'élément de stockage intermédiaire (34) pour prévoir l'ouverture de passage (66).

7. Dispositif de chauffage pour un véhicule selon une des revendications 3 à 6, **caractérisé par** la zone de fixation (36) étant fixée au boîtier d'échangeur de chaleur (24) en stockant de façon intermédiaire un élément de distance (70).

8. Dispositif de chauffage pour un véhicule selon la revendication 7, **caractérisé par** ledit au moins un élément de distance (70) étant arrange pour entourer un boulon de fixation (68).

9. Dispositif de chauffage pour un véhicule selon une des revendications 3 à 8, **caractérisé par** une structuration de surface (76) permettant la circulation d'air étant prévue à une paroi frontale (32) du boîtier d'échangeur de chaleur (24) ou/et à la zone de fixation (36).

10. Dispositif de chauffage pour un véhicule selon une des revendications 3 à 9, **caractérisé par** une depression (80; 84) étant formée dans au moins une region circonférentielle à une paroi frontale (32) du boîtier d'échangeur de chaleur (24) ou/et à la zone de fixation (36).
